# EUROPEAN PATENT APPLICATION

(11) **EP 4 629 065 A1**
(43) Date of publication of application: **08.10.2025**
(21) Application number: 24168760.7
(22) Date of filing: 05.04.2024
(51) Int. Cl.: G06F 9/00, G06F 30/00, G06N 5/022

(54) **FRAMEWORK WITH LARGE LANGUAGE MODEL FOR PROVIDING PROCESS INFORMATION AND METHOD**

(71) Applicant: ABB SCHWEIZ AG, 5400 Baden (CH)
(72) Inventor: RODRIGUEZ, Pablo, 69488 Birkenau (DE); BREKKE, Gitle, 5022 Bergen (NO)
(74) Representative: Maiwald GmbH

(57) **Abstract**

The invention relates to a computer implemented method for providing process information of an industrial process, the computer implemented method being executed on a framework (100) comprising a Large Language Model (102), LLM, a code structure (110) comprising at least one prompt (130, 140, 1050, 160), wherein a prompt contains a configuration as input for the LLM, and an API (104), wherein the API provides the communication at least between the code structure, the computer implemented method comprising the steps: running (502) a first prompt (130) comprising a process description, by the code structure; providing (504), by the code structure, the configuration contained in the first prompt over the API to the LLM; extracting (506), by the LLM, process information according to the configuration contained in the first prompt and providing the extracted process information via the API to the code structure; receiving (508), by the first prompt, the extracted process information; and generating (510), by the first prompt, an output containing the extracted process information.

## Description

### Technical Field

The invention relates to a computer implemented method for providing process information of an industrial process, in particular, for visualizing the process system and for identifying possible process disturbances. The invention further relates to a framework comprising a Large Language Model.

### Background

The process industry comprises various configurations and systems tailored to different sectors, each with its own set of components and parts. These industries face unique challenges and issues. Due to the individual nature of each system, training RL agents for control systems can be challenging, as there are numerous factors to consider.

However, it is crucial to expose these problems to the control systems to ensure they are robust enough to handle real-life conditions, not just simulations with simplified and controlled environments where disturbances may be ignored or marginalized. The same issues arise with control solutions. A control solution must be tested through the faults of its corresponding system to ensure the necessary robustness to work properly. Identifying and categorizing these issues can be a time-consuming task that requires prior knowledge of the specific process.

### Summary of the Invention

Therefore, there may be a desire to find an improved solution for identifying possible process disturbances.

The problem is solved by the subject-matter of the independent claims. Embodiments are provided by the dependent claims, the following description and the accompanying figures.

The described embodiments similarly pertain to the computer implemented method, the framework. Synergetic effects may arise from different combinations of the embodiments although they might not be described in detail.

Further on, it shall be noted that all embodiments of the present invention concerning a method might be carried out with the order of the steps as described, nevertheless this has not to be the only and essential order of the steps of the method. The herein presented methods can be carried out with another order of the disclosed steps without departing from the respective method embodiment, unless explicitly mentioned to the contrary hereinafter.

Technical terms are used by their common sense. If a specific meaning is conveyed to certain terms, definitions of terms will be given in the following in the context of which the terms are used.

According to a first aspect, a computer implemented method for providing process information of an industrial process is provided. The computer implemented method is executed on a framework comprising a Large Language Model, LLM, a code structure comprising at least one prompt, wherein a prompt contains a configuration as input for the LLM, and an API, wherein the API provides the communication at least between the code structure, the computer implemented method comprising the steps:
running a first prompt comprising a process description, by the code structure,
providing, by the code structure, the configuration contained in the first prompt over the API to the LLM,
extracting, by the LLM, process information according to the configuration contained in the first prompt and providing the extracted process information via the API to the code structure,
receiving, by the first prompt, the extracted process information; and generating, by the first prompt, an output containing the extracted process information.

According to an embodiment, the extracted process information of the first prompt is a configuration information relating to the process system.

A prompt may be seen in one part as an input instance. The expression "running a first prompt comprising a process description" may therefore also be interpret as "running a first prompt receiving a process description and therefore comprising the process description". Such an input instance or prompt may receive its input from, for example documents available in the framework, from servers or nodes in a network to which the framework is connected, from a database or any memory to which the framework has access, or from a user over an HMI, e.g., interactively on run-time. That is, depending on the results from the LLM, the prompt might provide additional questions to refine the output. Further, a script containing predefined questions to automate the process may be used. In embodiments, the input may contain for example, text, images, code, or lists, which may also be structured such as xml files, Jason files, etc. Similarly, in embodiments, the output may be lists containing text and/or graphics, where the text can have any format. I.e. it may be a plain ASCII file or formatted in any way. The input is denominated "configuration" herein, because it may be a current configuration of the process system, e.g., specified in a descriptive form, or other information about the process system or derived from the process system. At the same time, the configuration is a configuration with respect to the LLM, which is manipulated according to this configuration.

However, a command prompt also conceals a functionality realized by code of the code structure. Therefore, the terminology "a prompt is executed" is used herein. This functionality consists of providing an input to the LLM via an API and receiving a result. The LLM extracts information based on the input and provides the information back to the prompt or at least to the code structure. The prompt or code structure may further prepare the result received from the LLM and generate the final output in the wanted or required form, such that the extracted information is presented clearly to a user or is in a digital format that can be read by a further prompt. Viewed the other way around, when a prompt is executed, the prompt itself does not extract information from the input but the LLM does. It can be said that the prompt controls or manipulates the LLM in a certain way.

In this disclosure, the term "process" relates always to the industrial process system, i.e. to the application. It does not relate to the methods or method steps. "Process information" is related to a process or process system and can be any information derived from the input. Examples are given further below. A "process description" is the description of the process or process system. It describes, for example, the components of the process system and their connections, as well as their current state, variables for measurements, thresholds, etc.

A Large Language Model may be defined as a type of artificial intelligence model that has been trained through deep learning algorithms to recognize, generate, translate, and/or summarize vast quantities of written human language and textual data.

According to an embodiment, the first prompt is a Process System Configuration, PSC, prompt for presenting the process system to the LLM and for visualizing the process system.

The configuration may define what information regarding the process system shall be extracted by the LLM. For example, in embodiments, the configuration or a part of the configuration represents a process topology. The PSC receives input that contains for example text or images from documents specifying the process system including the topology or receives input from an HMI (Human Machine Interface). For that, the code structure comprises a suitable data interface to an external or internal data source, such as data base etc. The data interface may be an interface to an orchestrator, a server, a network, etc. The PSC further provides a visualization of the process system such that a user can view, check and validate whether the process system is defined and interpreted correctly.

Once the process system has been presented to the LLM, i.e. provided over the API to the LLM, the code structure can act as an interface between the LLM and the user to simplify the process.

According to an embodiment, the PSC contains a configuration that causes the LLM to identify system components, states of the systems and variables of the system components.

Examples for system components are an inlet, a gas outlet, an oil outlet, a valve (inlet, gas outlet, oil outlet), a pressure sensor, a level sensor, or a separator tank. Further, states may be for example an open valve, a closed valve, a high gas pressure, a high oil level and a normal oil level. Examples of variables are a gas flow rate, an oil flow rate, a gas pressure, or an oil level.

According to an embodiment, the code structure comprises a second prompt, and the method comprises the further steps:
running a second prompt, by the code structure, wherein the configuration contained in the second prompt is based on the extracted process information of the first prompt and defines which further process information to be extracted by the LLM,
providing, by the code structure, the configuration contained in the second prompt over the API to the LLM,
extracting, by the LLM, process information according to the configuration contained in the second prompt and providing output containing the extracted process information via the API to the code structure,
receiving, by the second prompt, the extracted process information, and generating, by the second prompt, an output containing the extracted process information.

Multiple prompts can be created and integrated to be used on demand. The second prompts may use the output of the first prompt comprising the validated process system configuration.

To extract specific information, the prompts will have different actions to provide the user with the desired results. The prompts can be created in advance and integrated into the code structure to be easily used by simply calling their names. By using prompts, the proposed solution may be able to create a more stable performance. As the use of LLM is generally unpredictable due to its black box nature, it can be difficult to produce consistent results. This could counteract some of the randomness and create an environment for repeatable results.

According to an embodiment, the process information of the second prompt is a configuration information relating to an issue of the process system.

That is, alternatively or additionally to the configuration information relating to the process such as a topology, the process information may specify what type of issue of the process system shall be extracted by the LLM. The type of issue may address a specific failure, problem, disturbance, etc. The type of issue may further be a process system issue or a component issue.

According to an embodiment, the prompts are executed in series or in parallel branches.

"In series" means that the output of the previous prompt is used as input for the current prompt, and the output of the current prompt is uses as input for a following prompt. "In parallel branches" means that there may be separate branches, where one branch does not use an output obtained in another branch. However, in embodiments outputs generated in branches may be merged and used as input for a prompt in any of the branches or a new branch.

According to an embodiment, a further prompt is a System Events Configuration that causes the LLM to extract system events.

The events indicate issues such as problems, failures and disturbances based on the system as a whole. This means it, focuses on the system structure, and the system process as a whole.

According to an embodiment, a further prompt is a Components Events Configuration that causes the LLM to extract component events.

The events indicate issues such as problems, failures and disturbances based on the individual components and parts that are part of the process system. This means that it should focus on individual parts and their relationships rather than the whole process.

According to an embodiment, a further prompt is a Simulation Event Generation, SEG, for providing simulation implementation assistance for the different problems, disturbances and failures discovered in the process system.

The simulation implementation assistance can provide assistance in the form of code, text or in any other suitable form and assists in the preparation and execution of tests with respect to the problems in the simulation environment. Connecting the LLM to a simulator helps to either find process issues or to confirm hypothesis. The assistance could be fully or partially automated, e.g. by integrating the generated code automatically into the simulation environment.

By using specific prompts the solution can differentiate and provide specific information depending on what is needed for analyzing the process definition, identifying issues and simulating the process including the identified issues.

According to an embodiment, the first and/or the second prompts are pre-defined, configurable and/or receive input from an HMI.

The framework may comprise respective interfaces. E.g. for a configurable prompt an interface to a configuration file may be available. Similarly, for the HMI an interface to input and output devices such as a keyboard, touchscreen, monitor, display, etc., may be available.

According to an embodiment, lists comprising events are generated by the second prompt.

That is, the solution has the ability to create event lists based on the results and information through the code from the LLM.

According to an embodiment, lists comprising events are drilled down by the second prompts to create more detailed information of problems, failures, and disturbances based on the prompt configuration.

According to an embodiment, the framework runs a third prompt, which is an external prompt, wherein the external prompt contains a configuration for extracting specific information from a list.

According to an embodiment, event lists are drilled down by the second prompts to create more detailed information of problems, failures, and disturbances based on the prompt configuration.

In addition to the detailed lists based on the previous list, there is an option to provide external prompts to a list. This external prompt can contain a configuration for obtaining anything the user wants to relate the problem to: components, systems, parameters, states, etc. Since it is an external prompt, it has not to be integrated into the framework an advance. There may be a library of external prompts, from which a user can choose a prompt from. The library may be built up and extended independently from the framework.

According to a further aspect, a framework for providing process information of an industrial process is provided. The framework comprises:
a Large Language Model, LLM, a code structure, wherein the code structure comprises at least one prompt, wherein a prompt contains a configuration as input for the LLM, an API, wherein the API provides the communication at least between the code structure, wherein the code structure is configured to run a first prompt comprising a process description and to provide the configuration contained in the first prompt over the API to the LLM, the LLM is configured to extract process information according to the configuration contained in the first prompt and to provide the extracted process information via the API to the code structure, and the first prompt is configured to receive the extracted process information; and to generate, by the first prompt, an output containing the extracted process information.

This solution provides an overview that can serve as a basis for the operator or engineer to better understand the system, which is helpful, for example, when engineers and operators are introduced to a new process where they rely on their understanding of the system to understand its potential and limitations.

The framework may be stored as a computer program on a non-volatile memory such as a computer readable medium comprising instructions representing the framework, wherein the instructions are suitable to be executing by a processor or controller for performing the steps of the method as described herein. The computer program may be part of another computer program, but it can also be an entire program by itself. For example, the computer program element may be used to update an already existing computer program to get to the present invention. The controller may comprise circuits without programmable logics or may be or comprise a micro controller, a field programmable gate array (FPGA), an ASIC, a Complex Programmable Logic Devices (CPLD), or any other programmable logic devices known to person skilled in the art. The computer readable medium may be seen as a storage medium, such as for example, a USB stick, a CD, a DVD, a data storage device, a hard disk, or any other medium on which a program element as described above can be stored.

These and other features, aspects and advantages of the present invention will become better understood with reference to the accompanying figures and the following description.

### Short Description of the Figures

Fig. 1 shows a block diagram showing the structure of the framework;
Fig. 2 shows an example of a PSC prompt;
Fig. 3 shows an example of the workflow;
Fig. 4 shows a first flow diagram of the method;
Fig. 5 shows a second flow diagram of the method.

### Detailed Description of Embodiments

Corresponding parts are provided with the same reference symbols in all figures.

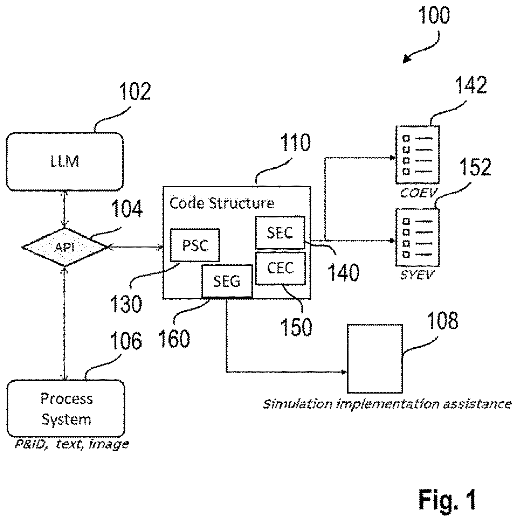

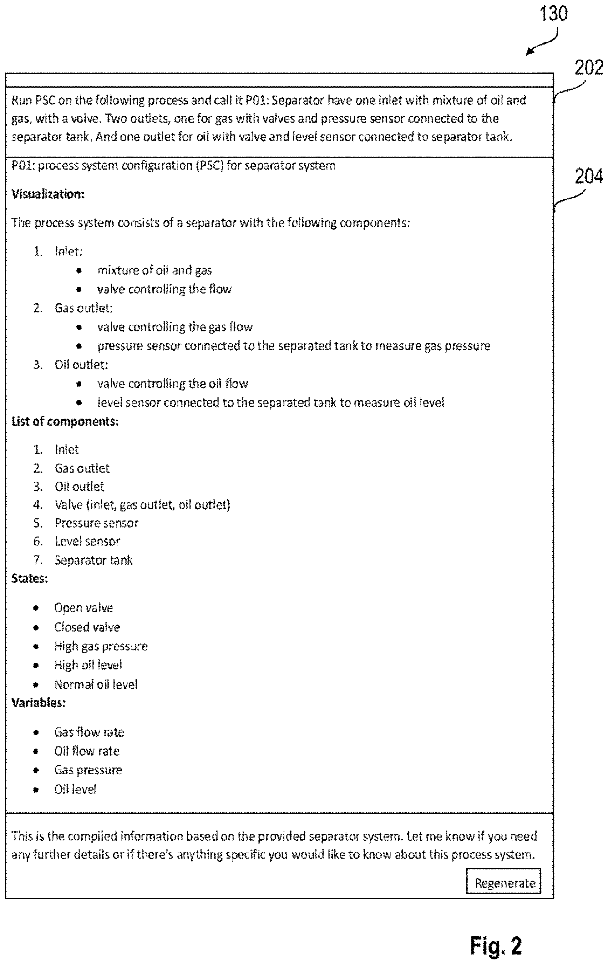

Fig. 1 shows a block diagram showing the structure of the framework 100. The basic element is the LLM 102, which processes the input from the prompts and provides the outputs, e.g. in form of lists. The input may contain for example, a description in text form and/or lists, which may also be structured such as xml files, Jason files, etc. The LLM provides as output lists that depend on the prompts. The prompts are part of the code structure 110 and can be defined before operating the system 100. A prompt, e.g. the PSC prompt 130 can use input such as P&ID diagrams or descriptions, text, images etc. that comprise information about the process system 106. The communication between the LLM 102, the code structure 110 and the process system description 106. The output of the LLM is provided back to the code structure, which again provides the output either to another prompt such as the SEC prompt 140, the CEC prompt 150 or the SEG prompt 160, or to a user or operator. The output 142, 152, 204 provided by the code structure are usually lists and depends on the prompts. E.g., the output based on a PSC 130 are a visualization, a list of components, states and variables as shown in Fig. 2 in the area indicated "204". The output provided by the code structure can further be used for simulating the process system with the identified system and component events, i.e. as input for the simulation implementation assistance 108. The code structure 110 is configured to call the prompts in a pre-defined order, which may be sequential or parallel, to store the results in a memory and to read from the memory. Further, the code structure may be configured to provide an HMI.

Fig. 2 shows an example of a PSC prompt 130. As shown in Fig. 2, by the prompt 130, the PSC shall be run on the process as defined using sentences that describe the process system. The text may be pre-defined, e.g., read from a file, or input at run-time. When running the PSC, code is executed to communicate over API 104 with the LLM 102 and to output the extracted information. The PSC prompt 130 in the example of a separator process system as given in Fig. 2 is configured to run the PSC on the following process and to assign the name P01 to the output, as shown in area 202: "Separator have one inlet with mixture of oil and gas, with a volve. Two outlets, one for gas with valves and pressure sensor connected to the separator tank. And one outlet for oil with valve and level sensor connected to separator tank." The P01 output 204 for the process system configuration for the separator system then comprises a visualization of the process system consisting of a separator comprising an inlet with a mixture of oil and gas and a valve controlling the flow, a gas outlet with a valve controlling the gas flow and a pressure sensor connected to the separated tank to measure gas pressure, and an oil outlet with a valve controlling the oil flow and a level sensor connected to the separated tank to measure oil level. The visualization may also be presented graphically. Instead of an output, the visualization may be provided as an input to the PSC in a previous step. Another output of the PSC prompt 130 is a list of components comprising an inlet, a gas outlet, an oil outlet, a valve (inlet, gas outlet, oil outlet), a pressure sensor, a level sensor, and a separator tank. Further, states comprising an open valve, a closed valve, a high gas pressure, a high oil level and a normal oil level are listed as well as variables comprising a gas flow rate, an oil flow rate, a gas pressure, and an oil level.

Further, the PSC prompt 130 asks if the user needs any further details or if there's anything specific of if the user would like to know about this process system.

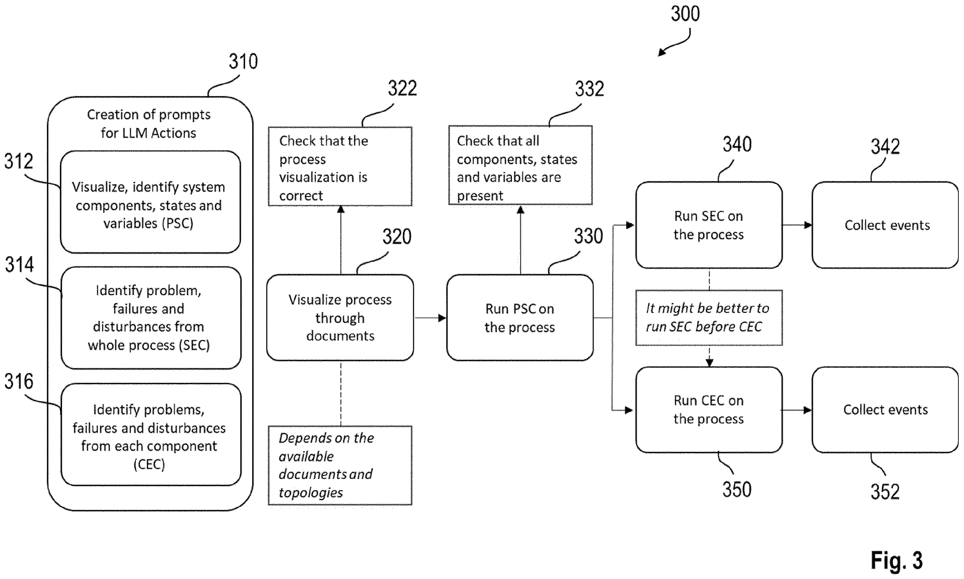

Fig. 3 shows the example of the workflow and how to use the proposed solution. First, 310, the prompts are created and integrated into the code. These can also be modified or finetuned at a later stage to adapt them to a specific process. In the example of Fig. 3, a first prompt 130 is created in 312 for visualizing, identifying system components and states and variables (PSC) as described above. The second prompt to be created is the SEC prompt 140 which is created in 314 for identifying problems, failures, and disturbances of the overall system process (SEC). The third prompt is the CEC prompt 150, which is created in 316 for identifying problems, failures, and disturbances of the individual components (CEC). There can be created as many different and specific prompts as required or desired. The fourth prompt is the SEG prompt 160, which is created in 318. In 320, the process system is presented to the LLM 102. The process is visualized through documents. The visualization depends on the available documents and topologies. The process presented to the LLM 102 represented by the process visualization is checked in 322 to ensure that the information is correct and accurate. If the visualization is not correct, the input may be updated, refined, or supplemented and the visualization is repeated, or the visualization is directly corrected. Once the visualization has been completed, the PSC action 330 can be applied to it. The visualization 320 and the PSC action 330 could be combined. Next, the list of problems, disturbances and failures can be generated by using the prompts 340 and 350. The SEC prompt 140 is run 340 to generate this information with respect to the system issues, and the CEC prompt 150 is run 350 to generate this information with respect to the components issues. Further, the SEG prompt 160 is run 360 to generate simulation event lists or code for assisting the simulation. In principle, the prompts 140, 150 and 160 can be executed in parallel or sequentially. Preferably, the SEC prompt 140 is executed before the CEC prompt 150. The respective events are collected in 342, 352 and 362 and exported as lists and will then be exported. The lists provide a simple overview of the system and component issues.

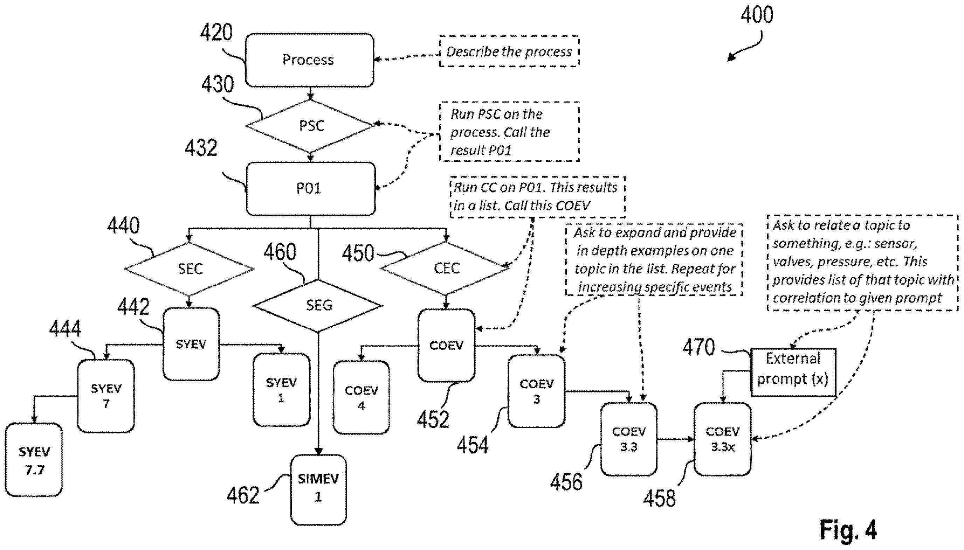

Fig. 4 shows a further example of applying the method on a process with focus on the generated list of different problems, disturbances, and failures results. In accordance with the example in Fig. 3, in 420 the process is described first using topologies and documents. In 430, the PSC prompt 130 is run and the description is provided to the LLM. The result is a list like the one shown in Fig. 1, which is named P01, 432, in this example. After the PSC prompt has been utilized in 430, the CEC prompt 150, SEC prompt 140, and SEG prompt 160 are executed in 450, 440 and 460 to extract information from the process presented to the LLM and to create separate lists 442, 452 and 462 based on the instructions specified to the prompts beforehand as shown in Fig. 3, referenced with signs 314 and 316. The lists 442, 452, and 462 can now been drilled down. The drill-down is illustrated in Fig. 4 as cascading lists 444, 454, 456, 458 with parent lists 442 and 452 created by the CEC and SEC prompts. The drill down lists 444, 454, 456, 458 may be created by the SEC 440 or CEC 450 prompts, or preferably by own prompts which are applied on the respective parent list. This makes it possible to create a more comprehensive, detailed, and specific list of the various problems, disturbances, faults, and failures. In addition to the detailed lists based on the previous list, an option to provide external prompts 470 for a list can be provided. This external prompt 470 can be anything that the user wants to associate with the problem: components, systems, parameters, states, etc.

One of the advantages is that if it should be necessary to create more in-depth list of any earlier list, only a callback on the specific list of interest is necessary. This allows to easily create an extensive overview without creating the lists again each time.

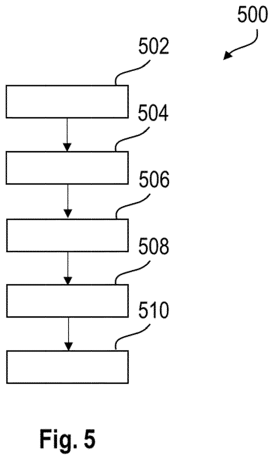

Fig. 5 summarizes the computer implemented method for providing process information of an industrial process, where the computer implemented method is executed on a framework comprising a Large Language Model, LLM, a code structure comprising at least one prompt, wherein a prompt contains a configuration as input for the LLM, and an API, wherein the API provides the communication at least between the code structure. The computer implemented method comprising the following steps as shown in Fig. 5:
In step 502, the code structure runs a first prompt comprising a process description. The prompt provides the possibility for a user to inputting e.g. process system information. The prompt may further receive input from other sources such as files or servers. In step 504, the code structure provides the configuration contained in the first prompt over the API to the LLM. In step 504 the LLM extracts process information according to the configuration contained in the first prompt and provides the extracted process information via the API to the code structure. Extracting comprises also presenting the process information in a specific way, which can be used by the first prompt, after receiving the extracted information in step 506, to generate 508 an output, e.g. as shown in Fig. 2. The output can then be forwarded to further prompts. Any of the prompts provides the possibility for a user to give an input to the prompts so that the prompts can provide the required information. For example, the prompts can ask the user questions, where the questions are specific for the respective type of prompt. The interface to the user may be a human-machine interface (HMI), for example.

Other variations to the disclosed embodiments can be understood and effected by those skilled in the art in practicing the claimed invention, from the study of the drawings, the disclosure, and the appended claims. In the claims, the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. Any reference signs in the claims should not be construed as limiting the scope of the claims.

### List of Reference Signs

- 100: Framework/System
- 102: Large Language Model
- 104: API
- 106: Process System
- 108: Simulation implementation assistance
- 110: Code Structure
- 130: PSC (Process System Configuration) prompt
- 140: SEC (System Events Configuration) prompt
- 142: Component Events Output List
- 150: CEC (Component Events Configuration) prompt
- 152: System Events Output List
- 160: SEG (Simulation Events Generation) prompt
- 202: Description of the process system
- 204: Output of the PSC: Visualization and Lists
- 300: Method; dependencies and operator responsibilities
- 310: Create LLM Actions
- 312: Creation of PSC prompt
- 314: Creation of SEC prompt
- 316: Creation of CEC prompt
- 318: Creation of SEG prompt
- 320: Visualize process through documents
- 322: Check visualization
- 330: Run PSC on the process
- 332: Check presence of components, states and variables
- 340: Run SEC on the process
- 342: Collect system events
- 350: Run CEC on the process
- 352: Collect components events
- 360: Run SEG on the process
- 362: Collect simulation events
- 400: Method; flow diagram
- 420: Describe Process
- 430: Run PSC
- 432: PSC output list
- 440: Run SEC
- 442: System events output list
- 444: System events output list derived from list 442
- 450: Run CEC
- 452: Component events output list
- 454: Component events output list derived from list 452
- 456: Component events output list derived from list 454
- 458: Component events output list derived from list 456 based on external prompt
- 460: Run SEG
- 462: Simulation events output list or code
- 470: External prompt
- 500: Method
- 502-510: Method steps

## Claims

1. Computer implemented method (500) for providing process information of an industrial process, the computer implemented method being executed on a framework (100) comprising a Large Language Model (102), LLM, a code structure (110) comprising at least one prompt (130, 140, 1050, 160), wherein a prompt contains a configuration as input for the LLM, and an API (104), wherein the API provides the communication at least between the code structure, the computer implemented method comprising the steps:
running (502) a first prompt (130) comprising a process description, by the code structure;
providing (504), by the code structure, the configuration contained in the first prompt over the API to the LLM;
extracting (506), by the LLM, process information according to the configuration contained in the first prompt and providing the extracted process information via the API to the code structure;
receiving (508), by the first prompt, the extracted process information; and
generating (510), by the first prompt, an output containing the extracted process information.

2. Computer implemented method according to claim 1, wherein the extracted process information of the first prompt is a configuration information relating to the process system.

3. Computer implemented method according to any one of the previous claims, wherein the first prompt is a Process System Configuration, PSC, prompt for presenting the process system to the LLM and for visualizing the process system.

4. Computer implemented method according to any one of the previous claims, wherein the PSC contains a configuration that causes the LLM to identify system components, states of the systems and variables of the system components.

5. Computer implemented method according to claim 1 or 2, wherein the code structure comprises a second prompt, and the method comprises the further steps:
running a second prompt, by the code structure, wherein the configuration contained in the second prompt is based on the extracted process information of the first prompt and defines which further process information to be extracted by the LLM;
providing, by the code structure, the configuration contained in the second prompt over the API to the LLM;
extracting, by the LLM, process information according to the configuration contained in the second prompt and providing output containing the extracted process information via the API to the code structure;
receiving, by the second prompt, the extracted process information; and
generating, by the second prompt, an output containing the extracted process information.

6. Computer implemented method according to claim 5, wherein the process information of the second prompt is a configuration information relating to an issue of the process system.

7. Computer implemented method according to claim 5 or 6, wherein the first prompt and/or at least one second prompt are executed in series or in parallel branches.

8. Computer implemented method according to any one of claims 5 to 7, wherein the second prompt is a System Events Configuration, SEC, that causes the LLM to extract system events.

9. Computer implemented method according to any one of claims 5 to 8, wherein the second prompt is a Components Events Configuration, CEC, that causes the LLM to extract component events.

10. Computer implemented method according to any one of claims 5 to 9, wherein the second prompt is a Simulation Event Generation, SEG, for providing simulation implementation assistance for the different problems, disturbances and failures discovered in the process system.

11. Computer implemented method according to any one of claims 5 to 10, wherein the first and/or the second prompts are pre-defined, configurable and/or receive input from an HMI.

12. Computer implemented method according to any one of claims 5 to 11, wherein, by the second prompt, lists comprising events are generated.

13. Computer implemented method according to the previous claim, wherein the framework runs a third prompt, which is an external prompt, wherein the external prompt contains a configuration for extracting specific information from a list.

14. Computer implemented method according to claims 5 to 13, wherein, by the second prompts, event lists are drilled down to create more detailed information of problems, failures, and disturbances based on the prompt configuration.

15. Framework (100) for providing process information of an industrial process, comprising
a Large Language Model (102), LLM;
a code structure (110), wherein the code structure comprises at least one prompt (130, 140, 1050, 160), wherein a prompt contains a configuration as input for the LLM;
an API (104), wherein the API provides the communication at least between the code structure,
wherein
the code structure (110) is configured to run a first prompt (130) comprising a process description and to provide the configuration contained in the first prompt over the API to the LLM;
the LLM is configured to extract process information according to the configuration contained in the first prompt and to provide the extracted process information via the API to the code structure; and
the first prompt (130) is configured to receive the extracted process information; and to generate an output containing the extracted process information.
